# EUROPEAN PATENT APPLICATION

(11) **EP 1 972 895 A2**
(43) Date of publication of application: **24.09.2008**
(21) Application number: 08005374.7
(22) Date of filing: 20.03.2008
(51) Int. Cl.: G01C 21/36

(54) **Service provision system and rendering execution method**

(30) Priority: 22.03.2007 JP 2007074436
(71) Applicant: NEC Corporation, Minato-ku Tokyo (JP)
(72) Inventor: Katou, Manabu, Minato-ku, Tokyo (JP)
(74) Representative: Glawe, Delfs, Moll

(57) **Abstract**

Disclosed is a service provision system including a server which includes application service programs, selects a program corresponding to profile data according to a service start request, and transmits rendering information selected by a data request; an in-vehicle information terminal which includes first profile data representing a terminal specification and performs a rendering process using a texture in the terminal by a rendering command; and a portable information device which includes second profile data representing a device specification, identifies a connection status with the terminal, and transmits the data request using the first or second profile data. The portable information device includes a data request transmission unit to transmit the data request using the.first profile data, and a rendering command transmission unit to generate the rendering command based on the rendering information and transmit the rendering command to the terminal, when the connection with the terminal is identified.

## Description

### INCORPORATION BY REFERENCE

This application is based upon and claims the benefit of priority from Japanese Patent Application No. 2007-074436, filed on March 22, 2007, the disclosure of which is incorporated herein in its entirety by reference.

### BACKGROUND OF THE INVENTION

### 1. TECHNICAL FIELD

The present invention relates to an improvement in a service provision system including a server and a portable information device or a service provision system including a portable information device and an in-vehicle information terminal, and an improvement in a rendering execution method applied to the service provision system.

### 2. BACKGROUND ART

A service provision system in which an application service program is used is publicly known. By the application service program, a server processes a data request transmitted from a portable information device such as a cellular phone, and transmits only a result of the process to the portable information device via a communication network.

On the other hand, technology for associating a service of a portable information device with function of an in-vehicle information terminal is limited to an area of a data communication function for a navigation service by the in-vehicle information terminal, or a voice communication function of the portable information device such as a cellular phone. Accordingly, a service and an application (hereinafter, referred to as application service) provided for a cellular phone cannot be applied to the in-vehicle information terminal. For example, when a user uses a navigation service provided for the cellular phone in a car, it is necessary to use a service through a small screen of a cellular phone. Such a navigation service lacks both comfort and safety.

A service in which a user can use the navigation service for the cellular phone by using the in-vehicle information terminal has been provided. However, in the above service system, a browser function of the in-vehicle information terminal is only applied to the navigation service for the cellular phone. A quality of the service system is almost the same as a quality provided by a screen of the cellular phone. Therefore, a service provision function provided for the in-vehicle information terminal cannot be utilized sufficiently.

A technology for reducing a communication time and a communication fee of a navigation system is disclosed (refer to Japanese Patent Application Laid-Open No. 2002-13938 (paragraph 0008)). The technology includes an information provision system in which map information is stored in an in-vehicle information terminal and data transmitted from a server to the in-vehicle information terminal is limited to only the additional map information. However, if such technology is used, an amount of data to be stored in the in-vehicle information terminal remarkably increases.

Moreover, an information display system is disclosed (refer to Japanese Patent Application Laid-Open No. 2003-244343 (paragraph 0023)). The information display system effectively uses a display of an in-vehicle information terminal by enlarging an image to be displayed in a portable information device and displaying the image on the display of the in-vehicle information terminal. However, in the system, an image is simply enlarged in a screen size proportionally with thinning data, and the like. In the system, since display data optimized for a display of the in-vehicle information terminal is not used, a quality level of an image is not necessarily guaranteed.

In other words, since a display size of the in-vehicle information terminal is usually larger than a display size of a portable information device, a small icon and a character as well as a map which are difficult to be recognized on a small display of the portable information device can be displayed in a large size. However, even though the enlarged data for a small display is displayed on a large display, a displayed image becomes rough and difficulty for recognizing the image in detail is not solved.

### SUMMARY

An exemplary object of the invention is to provide a service provision system and a rendering execution method by which an application service used by a portable information device such as a cellular phone is applied to an in-vehicle information terminal installed in a vehicle.

A service provision system according to an exemplary aspect of the invention includes a server which includes at least two application service programs, selects an application service program corresponding to profile data transmitted by an apparatus that transmits a service start request, and transmits rendering information stored in the application service program that is selected according to a data request, an in-vehicle information terminal which includes first profile data representing a specification of the terminal and performs a rendering process using a texture stored in the terminal based on a rendering command, and a portable information device which includes second profile data representing a specification of the device, identifies a status of connection with the in-vehicle information terminal, and transmits the data request to the server by using either the first profile data or the second profile data. The portable information device includes a data request transmission unit to transmit the data request to the server by using the first profile data when the connection with the in-vehicle information terminal is identified, and a rendering command transmission unit to generate the rendering command based on the rendering information received from the server and transmit the rendering command to the in-vehicle information terminal when the connection with the in-vehicle information terminal is identified.

A service provision system according to an exemplary aspect of the invention includes an in-vehicle information terminal which includes first profile data representing a specification of the terminal and performs a rendering process by using a texture in the terminal, based on a rendering command, and a portable information device which includes a second profile data representing a specification of the device and at least two application service programs, selects an application service program corresponding to profile data transmitted by an apparatus which transmits a service start request, transmits rendering information stored in an application service program that is selected according to a data request, identifies a status of connection with the in-vehicle information terminal, and transmits the data request by using either the first profile data or the second profile data. The portable information device includes a data request transmission unit to transmit the data request by using the first profile data when the connection with the in-vehicle information terminal is identified, and a rendering command transmission unit to generate the rendering command based on the received rendering information when the connection with the in-vehicle information terminal is identified.

A rendering execution method according to an exemplary aspect of the invention which is applied to a system that includes a server having at least two application service programs, an in-vehicle information terminal having a first profile data representing a specification of the terminal and a portable information device having a second profile data representing a specification of the device, the method includes identifying a status of connection with the in-vehicle information terminal and transmitting a data request to the server by using either the first profile data or the second profile data from the portable information device, selecting an application service program corresponding to the received profile data and transmitting from the server rendering information stored in the selected application service program to the portable information device which transmits the data request. When identifying that the portable information device is connected with the in-vehicle information terminal, the method further includes transmitting the first profile data to the server from the portable information device, generating a rendering command based on the rendering information received from the server and transmitting the rendering command to the in-vehicle information terminal from the portable information device and performing in the in-vehicle information terminal a rendering process by using a texture of the terminal based on the rendering command.

A rendering execution method according to an exemplary aspect of the invention which is applied to a system that includes an in-vehicle information terminal having a first profile data representing a specification of the terminal and a portable information device having at least two application service programs and a second profile data representing a specification of the device, the method includes identifying a status of connection with the in-vehicle information terminal, and selecting a corresponding application service program by using either the first profile data or the second profile data. When identifying that the portable information device is connected with the in-vehicle information terminal, the method further includes generating in the portable information device a rendering command based on rendering information stored in an application service program that is selected according to the first profile data and transmitting the rendering command to the in-vehicle information terminal, and performing in the in-vehicle information terminal a rendering process by using a texture of the terminal based on the rendering command.

### BRIEF DESCRIPTION OF THE DRAWINGS

Exemplary features and advantages of the present invention will become apparent from the following detailed description when taken with the accompanying drawings in which:
Fig. 1 is functional block diagram showing one exemplary embodiment of a service provision system including a server installed on a network, a cellular phone for providing an application service, a communication network for realizing communication between the server and the cellular phone, and an in-vehicle information terminal;
Fig. 2 is a sequence diagram showing a flow of an overall process when an application service program is used by the in-vehicle information terminal that is connected with the cellular phone in the service provision system of the exemplary embodiment;
Fig. 3 is functional block diagram showing one exemplary embodiment of the service provision system including the server installed on the network, the cellular phone for providing the application service, the communication network for realizing communication between the server and the cellular phone and the in-vehicle TV device installed in the vehicle;
Fig. 4 is a simplified block diagram showing a configuration of the in-vehicle TV device in the exemplary embodiment;
Fig. 5 is a simplified block diagram showing a configuration of the cellular phone in the exemplary embodiment;
Fig. 6 is a simplified block diagram showing a configuration of the server in the exemplary embodiment;
Fig. 7 is a flowchart showing an outline of processes which are repeatedly performed for each predetermined period in the cellular phone in the exemplary embodiment;
Fig. 8 is a flowchart showing an outline of processes which are repeatedly performed for each predetermined period in the cellular phone;
Fig. 9 is a flowchart showing an outline of processes which are repeatedly performed for each predetermined period in the cellular phone;
Fig. 10 is a flowchart showing an outline of processes which are repeatedly performed for each predetermined period in the cellular phone;
Fig. 11 is a flowchart showing an outline of processes which are repeatedly performed for each predetermined period in the cellular phone;
Fig. 12 is a flowchart showing an outline of processes which are repeatedly performed for each predetermined period in the server in the exemplary embodiment;
Fig. 13 is a flowchart showing an outline of processes which are repeatedly performed for each predetermined period in the server;
Fig. 14 is a flowchart showing an outline of processes which are repeatedly performed for each predetermined period in the in-vehicle TV device in the exemplary embodiment;
Fig. 15 is a flowchart showing an outline of processes which are repeatedly performed for each predetermined period in the in-vehicle TV device;
Fig. 16 is a sequence diagram showing a flow of an overall process when an application service program is used by the cellular phone that is used alone in the service provision system in the exemplary embodiment;
Fig. 17 is a sequence diagram showing a flow of an overall process when an application service program is used by the in-vehicle TV device that is connected with the cellular phone in the service provision system in the exemplary embodiment;
Fig. 18 is functional block diagram showing one exemplary embodiment of the service provision system including the cellular phone for providing the application service and the in-vehicle TV device installed in the vehicle;
Fig. 19 is a sequence diagram showing a flow of an overall process when the application service program is used by the cellular phone that is used alone in the service provision system in the exemplary embodiment; and
Fig. 20 is a sequence diagram showing a flow of an overall process when the application service program is used by the in-vehicle TV device that is connected with the cellular phone in the service provision system in the exemplary embodiment.

### EXEMPLARY EMBODIMENT

Exemplary embodiments will now be described in detail in accordance with the accompanying drawings.

### [First exemplary embodiment]

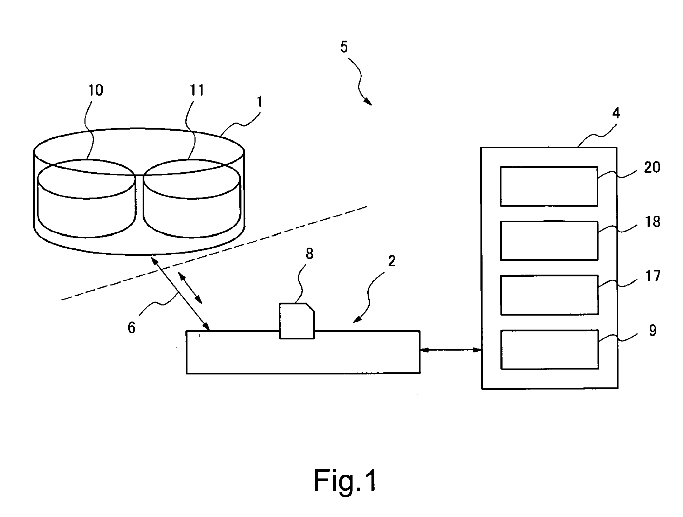

Fig. 1 is functional block diagram showing a service provision system of a first exemplary embodiment. The service provision system 5 includes a server 1, a cellular phone 2 for providing an application service which uses an application service program of the server 1, a communication network 6 for realizing communication between the server 1 and the cellular phone 2, and an in-vehicle information terminal 4.

The communication network 6 for realizing communication between the server 1 and the cellular phone 2 includes a plurality of base stations which communicate with the cellular phone 2 by wireless, and the internet or the like that connects the base stations with the server 1. Since such kind of communication technology is already publicly known, specific descriptions will be omitted.

The application service program described here is a server extension function by which a process of a data request transmitted from the cellular phone 2 is performed in the server 1 and only a result of the process is transmitted to the cellular phone 2 from the server 1 via the communication network 6, and this has been already known as a technology for dynamically producing a Web page.

The cellular phone 2 includes profile data representing a specification about function and performance of the cellular phone 2. On the other hand, the in-vehicle information terminal 4 includes profile data representing a specification about function and performance of the in-vehicle information terminal.

The profile data is information related to function and performance of the cellular phone 2 and the in-vehicle information terminal. The profile data includes information for example, an aspect ratio, resolution or the like of a display.

The server 1 includes an application service program 10 for portable information devices and an application service program 11 for in-vehicle information terminals. The application service program 10 for portable information devices includes, as rendering information, data such as an index, a size and the like of a texture according to a specification of the cellular phone 2. An application service program 11 for in-vehicle information terminals includes data such as an index, a size and the like of a texture according to a specification of an in-vehicle information terminal as rendering information. The application service program 10 for portable information devices which provides a service for the cellular phone 2 as a target is already publicly known. The application service program 11 for in-vehicle information terminals is an application service program specialized in function and performance of an in-vehicle information terminals and a specification of the application service program 11 for in-vehicle information terminals is different from that of the application service program 10 for portable information devices. However, basic function of the application service program 11 for in-vehicle information terminals by which a process of a transmitted data request is performed and the result of the process is transmitted to a source of the request via the communication network 6 is basically the same as that of the application service program 10 for portable information devices.

The in-vehicle information terminal 4 includes a texture database 17 in which texture data required for rendering is stored and a service renderer 18 that is a rendering execution means. The service renderer 18 performs a rendering process based on a rendering command sent from the cellular phone 2 and texture data stored in the texture database 17, and outputs a result of the process to a display unit 20.

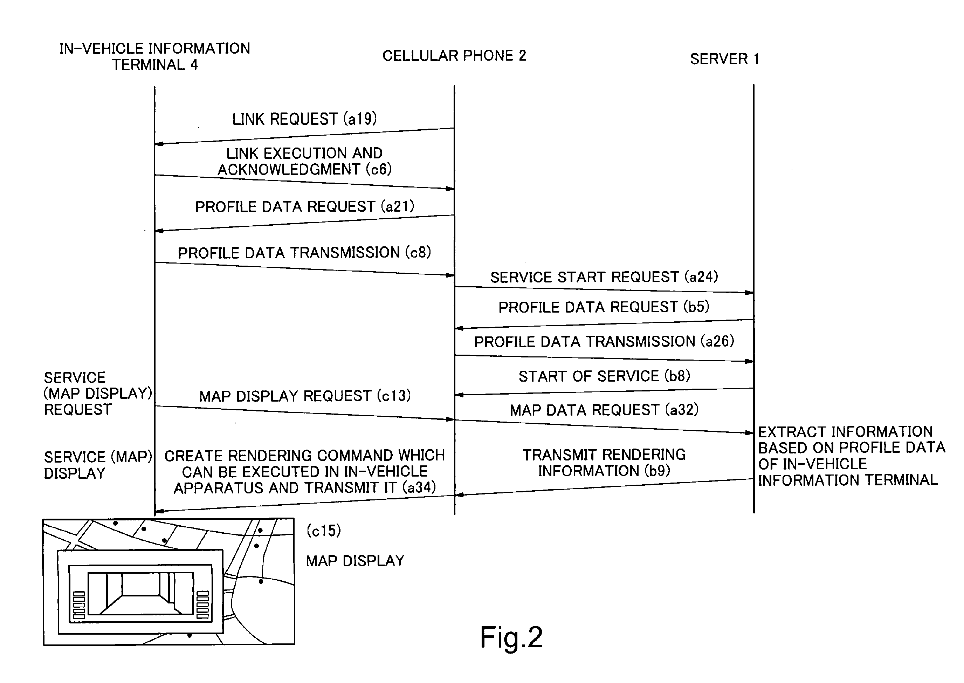

An operation of the service provision system according to the exemplary embodiment that includes a configuration mentioned above will be described with reference to Fig. 2.

In order to use a service, a cellular phone 2 is connected to an in-vehicle information terminal 4 to establish a link therebetween (step a19). When establishment of the link to the in-vehicle information terminal 4 is confirmed (step c6), the cellular phone 2 requests the in-vehicle information terminal 4 to transmit profile data (step a21). Upon reception of the request, the in-vehicle information terminal 4 transmits the profile data stored in its own terminal to the cellular phone 2 (step c8).

Upon receipt of the profile data from the in-vehicle information terminal 4, the cellular phone 2 requests a server 1 to start a service (step a24). When receiving the service start request, the server 1 requests a transmission of the profile data in order to identify a target of the service that is, a mobile phone or an in-vehicle information terminal 4 for which the service has to be provided (step b5). In response to the profile data transmission request, the cellular phone 2 transmits the profile data of the in-vehicle information terminal 4 received from the in-vehicle information terminal 4 to the server 1 (step a26).

When receiving the profile data from the cellular phone 2, the server 1 starts a service based on a corresponding application service program (step b8).

When map information for a navigation service is requested from the in-vehicle information terminal 4 (step c13), the cellular phone 2 requests map data to the server 1 (step a32). In response to the request, the server 1 extracts information based on the profile data of the in-vehicle information terminal 4 and sends the extracted information to the cellular phone 2 as rendering information (step b9).

When receiving the rendering information from the server 1, the cellular phone 2 generates a rendering command suitable for the in-vehicle information terminal 4 and transmits the command to the in-vehicle information terminal 4 (step a34).

When receiving the rendering command, the in-vehicle information terminal 4 performs a rendering process using a renderer to generate a map and display the map on a display unit (step c15). The map displayed on a screen at this time will be a detailed map which is suitable for a large screen provided in the in-vehicle information terminal 4. Then, a texture which the in-vehicle information terminal 4 includes may be optionally used.

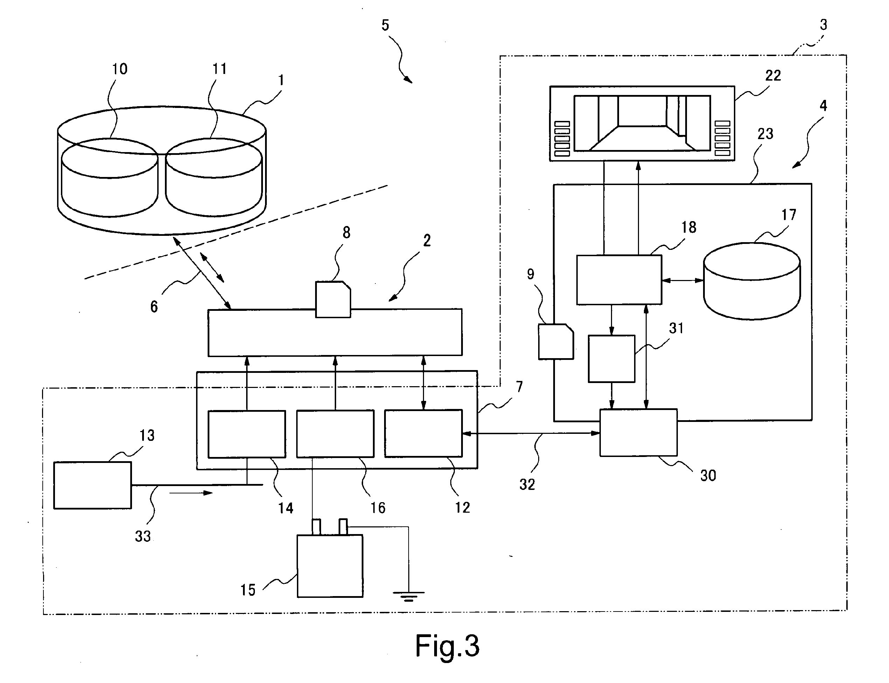

Fig. 3 is a detailed functional block diagram showing a service provision system according to the first exemplary embodiment. Here, an in-vehicle TV device is shown as a sample of the in-vehicle information terminal 4.

Referring to Fig. 3, an interface 7 for connecting the in-vehicle TV device 4 with the cellular phone 2 so that information can be transmitted therebetween is provided. The interface 7 is fixed in a vehicle 3. Moreover, the cellular phone 2 includes a profile data memory part 8 which stores profile data representing a specification about function and performance of the cellular phone 2. On the other hand, the in-vehicle TV device 4 includes a profile data memory part 9 which stores profile data representing a specification about function and performance of the in-vehicle TV device 4. The cellular phone 2 is detachable to the interface 7 in vehicle 3. The interface 7 also includes function for fixing the cellular phone 2 on a dashboard or the like in vehicle 3.

The interface 7 includes a service information transmission unit 12, a vehicle information transmission unit 14 and a power supply unit 16. The service information transmission unit 12 transmits and receives information about a data request, rendering or the like between the in-vehicle information terminal 4 and the cellular phone 2. The vehicle information transmission unit 14 transmits information required for navigation to the cellular phone 2. The information required for navigation includes data on a running speed (e.g. drive shaft revolution), an engine load (e.g. opening degree of a throttle), a final gear ratio (e.g. shift position) and the like detected by an in-vehicle engine control unit 13 used for an engine control, a power assist control or the like of the vehicle 3. The power supply unit 16 supplies an electric power of an in-vehicle battery 15 to the cellular phone 2. The service information transmission unit 12 is connected to an input/output interface 30 in in-vehicle TV device 4 via a service information system vehicle LAN 32. The vehicle information transmission unit 14 is connected to the in-vehicle engine control unit 13 in the vehicle 3 side via a vehicle information system vehicle LAN 33.

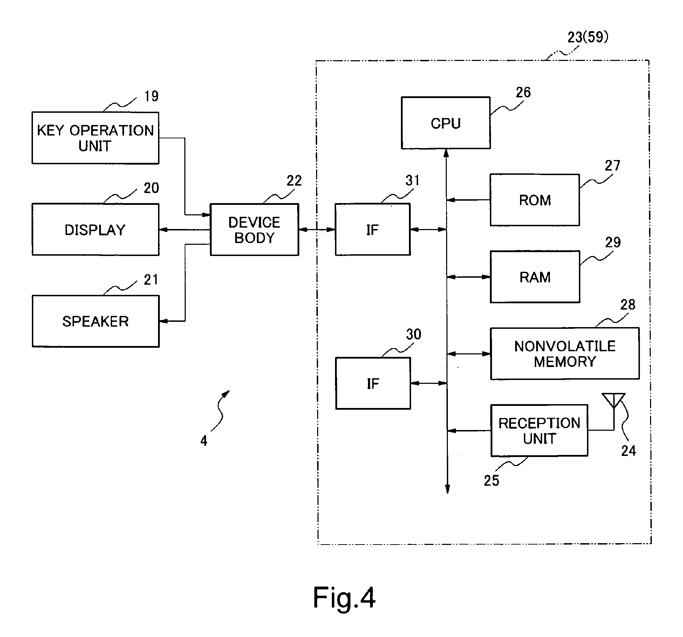

Fig. 4 shows a simplified configuration of the in-vehicle TV device 4 which functions as an in-vehicle information terminal.

The in-vehicle TV device 4 includes a device body 22 and a control unit 23. The device body 22 includes a key operation unit 19 that functions as a man-machine interface for inputting a data request that is required when the application service program is used, a display 20 and a speaker 21. The control unit 23 includes an antenna 24 and a reception unit 25 for receiving a TV radio wave. The service renderer 18 shown in Fig. 3 that is, a rendering execution means in the in-vehicle TV device 4 includes specifically a microprocessor 26 of the control unit 23 and a ROM 27 for storing a control program of the microprocessor as a function realization means.

The texture database 17 shown in Fig. 3 is stored in a read/write nonvolatile memory 28 with large capacity shown in Fig. 4. Specifically, the nonvolatile memory 28 stores texture data such as a character, an icon, or a color filled pattern required for displaying map information or the like. A content of the texture data can be optionally updated through external operations.

A RAM 29 is used for a temporary storage or the like of operation data when the microprocessor 26 of the in-vehicle TV device 4 which functions as the service renderer 18 shown in Fig. 3 performs a rendering process.

The profile data memory unit 9 shown in Fig. 3 may include the ROM 27.

The input/output interface 30 of the control unit 23 connects with the service information transmission unit 12 of the interface 7 shown in Fig. 3, and is used for transmitting and receiving information about a rendering, profile data or the like between the microprocessor 26 of the in-vehicle TV device 4 and the cellular phone 2.

A data request generated by operating the key operation unit 19 of the device body 22 is sent to the service information transmission unit 12 of the interface 7 by a process of the microprocessor 26 of the in-vehicle TV device 4, via the input/output interface 31 and the input/output interface 30 in the in-vehicle TV device 4, and the service information system vehicle LAN 32 shown in Fig. 3.

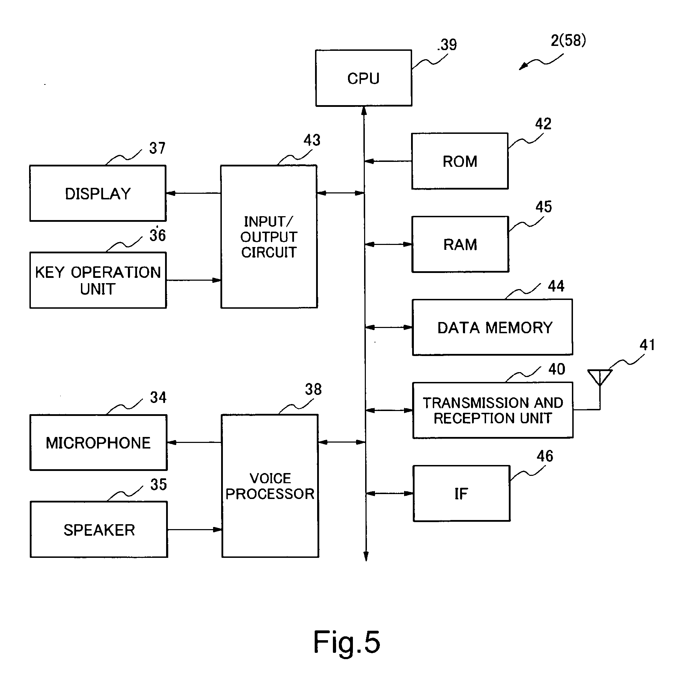

Fig. 5 is a simplified block diagram showing a configuration of the cellular phone 2 as an example of portable information devices.

The cellular phone 2 includes a microphone 34 for sending and receiving a voice, a speaker 35, a key operation unit 36 and a display 37. Usually, the display 37 of the cellular phone 2 is smaller than the display 20 of the in-vehicle TV device. An aspect ratio, resolution or the like in the displays 37 differ from those in the display 20.

When the cellular phone 2 is used as an ordinary cellular phone, a voice inputted from the microphone 34 is A/D converted by a voice processor 38 and the converted signal is transmitted to a microprocessor 39 of the cellular phone 2. After the voice is converted into data with a communication form by the microprocessor 39 of the cellular phone 2, the voice is modulated by a transmission and reception unit 40 to output via an antenna 41 that is of a built-in type or an extensible type. A radio wave for communication received by the antenna 41 is demodulated by the transmission and reception unit 40, the demodulated signal is transferred to the microprocessor 39 of the cellular phone 2 to be converted into voice data, and the voice processor 38 performs processing operations such as a D/A conversion to the voice date, and the processed data is outputted from the speaker 35 as a voice.

The key operation unit 36 includes a numeric keypad for inputting a telephone number, a key for an off-hook/on-hook operation and the like. The key operation unit 36 may be a man-machine interface for inputting a data request required when an application service program is used by the cellular phone 2 alone.

A ROM 42 stores a control program for transmitting/receiving a voice or an e-mail, a control program for using an application service program by the cellular phone 2 alone and the like.

The profile data memory unit 8 shown in Fig. 3 may include the ROM 42.

A signal from the key operation unit 36 is sent to the microprocessor 39 of the cellular phone 2 via an input/output circuit 43. The display 37 is driven and controlled by an instruction from the microprocessor 39 of the cellular phone 2 via the input/output circuit 43.

An interface 46 connects the cellular phone 2 with the interface 7 in vehicle 3. Specifically, the interface 46 includes a connection unit connect with the service information transmission unit 12, a connection unit to connect with the vehicle information transmission unit 14, and a connection unit to connect with the power supply unit 16.

An application service such as a navigation service that is provided for only the cellular phone 2 is already publicly known. When an application service such as a navigation service by the cellular phone 2 alone is used, the microprocessor 39 of the cellular phone 2 performs the rendering. That is, the microprocessor 39 of the cellular phone 2 performs a rendering process based on rendering information for portable information devices transmitted from the server 1 via the network 6. The texture data required for the rendering process and the like are stored in a non-volatile data memory unit 44 in advance. A RAM 45 is used for temporary storage or the like of operation data when the microprocessor 39 of the cellular phone 2 performs the rendering process. The operations above are already publicly known.

In the first exemplary embodiment, the microprocessor 39 of the cellular phone 2 may be a profile data transmission means, a data request transmission means, a rendering command generating means and a rendering command transmission means. The profile data transmission means determines whether or not the cellular phone 2 is connected with the interface 7 in the in-vehicle TV device 4, reads out profile data from one of either the profile data memory unit 8 of the cellular phone 2 or the profile data memory unit 9 of the in-vehicle TV device 4 and transmits the read out data to the server 1. Actually, when the cellular phone is connected with the in-vehicle TV device 4 via the interface 7, the profile data of the in-vehicle TV device 4 has been stored in a temporary storage in the cellular phone as described later, and the profile data of the in-vehicle TV device 4 is read out from the temporary storage. The data request transmission means transmits a data request transmitted from the in-vehicle TV device 4 and a data request generated by the cellular phone 2 to the server 1. The rendering command generating means analyzes rendering information for the in-vehicle TV device 4 transmitted from the server 1 and generates a rendering command for the in-vehicle TV device 4. The rendering command transmission means transmits the rendering command generated by the rendering command generating means to the in-vehicle TV device 4. A control program required for the processes above mentioned is stored in the ROM 42.

A wire connection or a wireless connection may be used for a connection between the interface 46 in the cellular phone 2 and the interface 7 of the in-vehicle TV device 4 installed in the vehicle 3.

Moreover, the service information transmission unit 12 and the power supply unit 16 or the vehicle information transmission unit 14 and the power supply unit 16 of the interface 7 can be integrated by superimposing data communication on power transmission like a PLC (high-speed power line communication). When a so-called cradle is used for a connection between the interface 7 and the cellular phone 2, the cellular phone 2 and the in-vehicle TV device 4 can be functionally linked only by putting the cellular phone 2 on the cradle if data communication is superimposed on a power transmission achieved by wireless. A power transmission by wireless which uses an electromagnetic induction between a primary coil in the cradle and a secondary coil in the cellular phone 2 is publicly known.

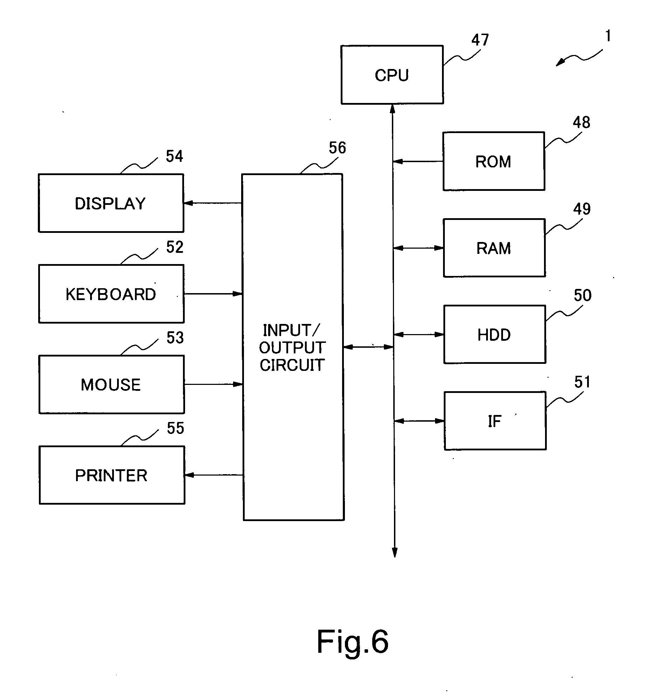

Fig. 6 is a block diagram showing a simplified configuration of the server 1.

The server 1 may include an ordinary computer such as a workstation or a personal computer. The server 1 includes a microprocessor 47 that is a processing means, a ROM 48 which stores a control program of the microprocessor 47 of the server 1, a RAM 49 used for a temporary storage or the like for operation data, a hard disk drive 50 that is a storage apparatus with large capacity, and an interface 51 for connecting with the communication network 6. An input/output circuit 56 connects with a keyboard 52 which functions as a data input device, a mouse 53, a display 54, a printer 55 and the like.

Specifically, the application service program 10 for portable information devices and the application service program 11 for in-vehicle information terminals shown in Fig. 3 include the microprocessor 47 of the server 1, the ROM 48 in which a control program of the microprocessor 47 is stored and the hard disk drive (HDD) 50 which stores rendering information according to a specification of the cellular phone 2 and rendering information according to a specification of the in-vehicle TV device 4. Although only one hard disk drive 50 is shown here, a hard disk drive storing the rendering information according to the specification of the cellular phone 2 and a hard disk drive storing the rendering information according to the specification of the in-vehicle TV device 4 may be provided individually.

As mentioned above, the application service program 10 for portable information devices is already publicly known. The application service program 11 for the in-vehicle information terminal is an application service program specialized in function and performance of the in-vehicle TV device 4 and a specification of the application service program 11 for the in-vehicle information terminal is different from that of the application service program 10 for portable information devices. However, a basic function of the application service program 11 for the in-vehicle information terminal by which a process of a transmitted data request is performed and a result of the process is transmitted to a source of the request via the communication network 6 is basically the same as that of the application service program 10 for portable information devices.

Referring to Fig. 6, in the first exemplary embodiment, the microprocessor 47 of the server 1 may also include an application service program selection means and a rendering information transmission means. The application service program selection means selects one of either the application service program 10 for portable information devices or the application service program 11 for in-vehicle information terminals as an application service program of a use target according to profile data transmitted from the cellular phone 2. The rendering information transmission means reads out rendering information from an application service program selected at that time in response to a data request transmitted from the cellular phone 2 and transmits the read out information to the cellular phone 2. A control program required for the processes may be stored in the ROM 48.

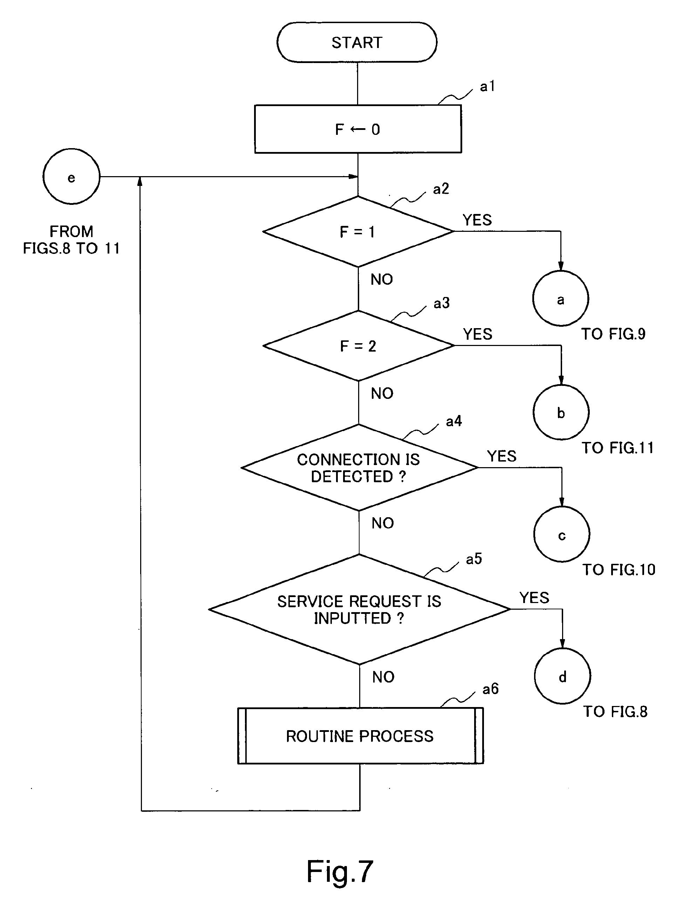

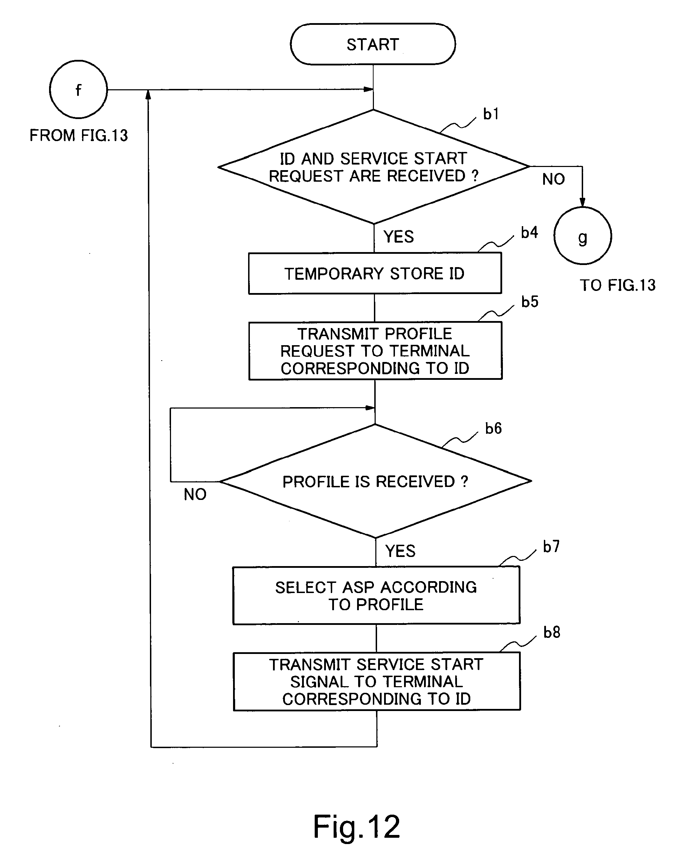

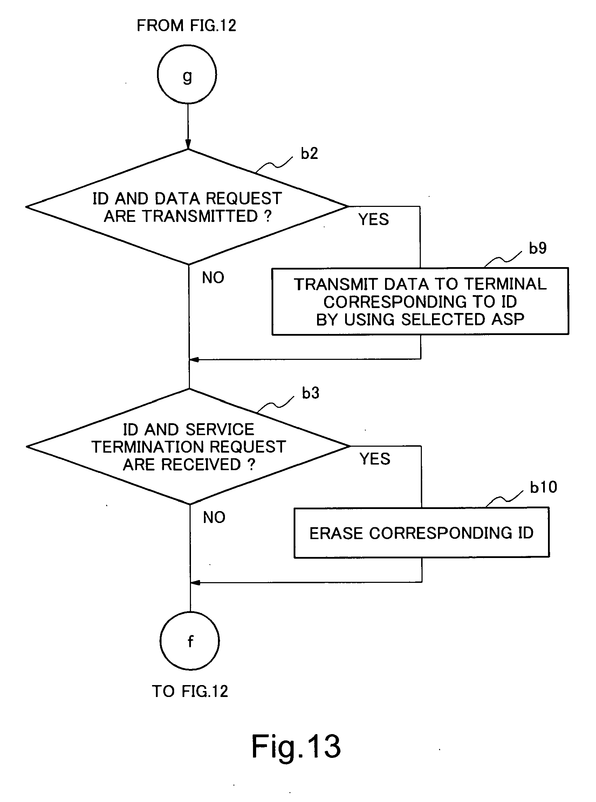

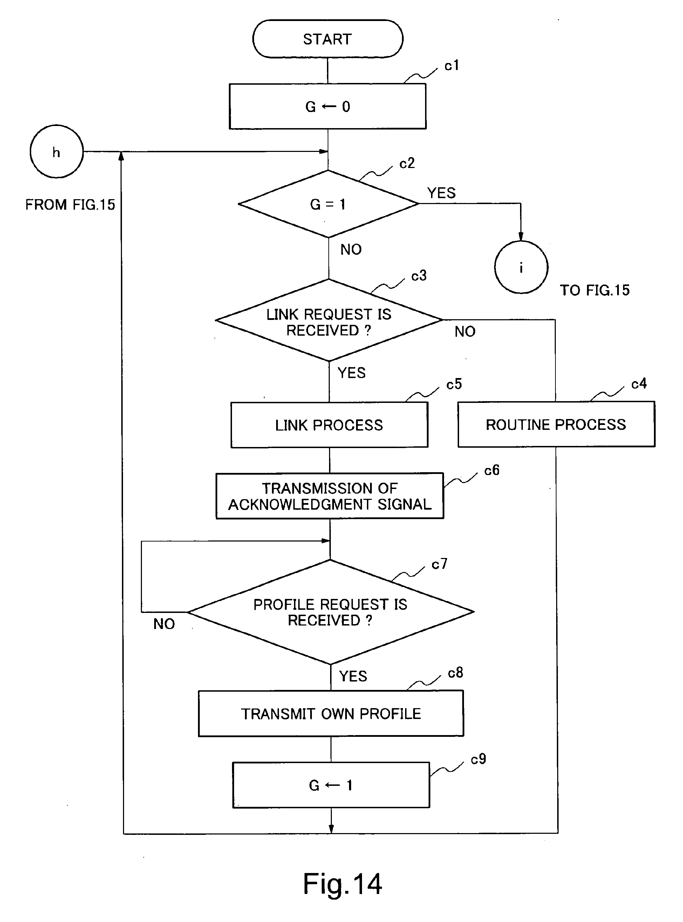

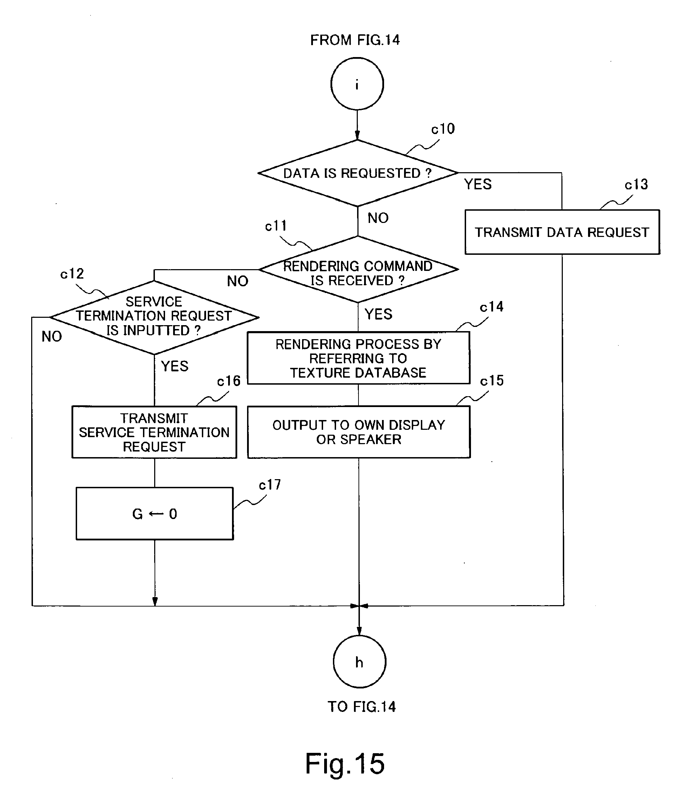

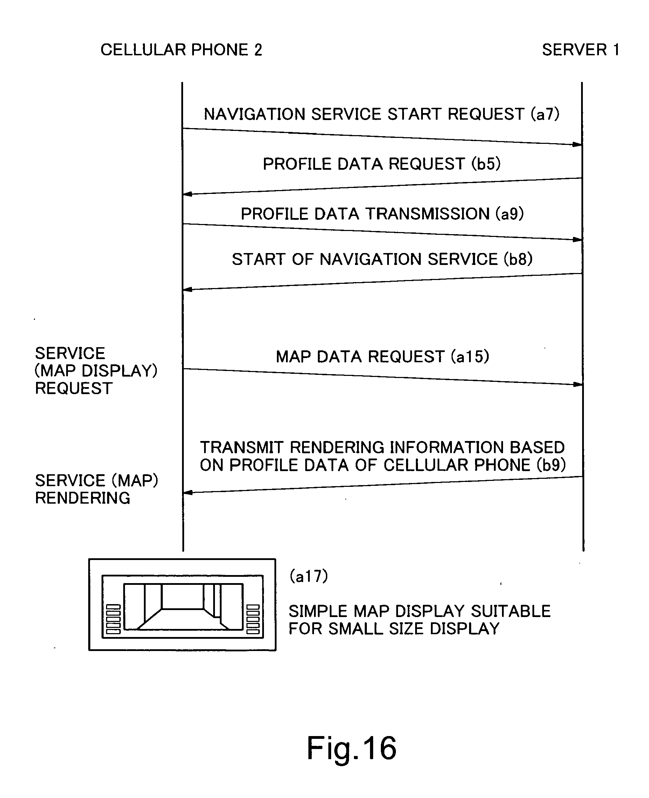

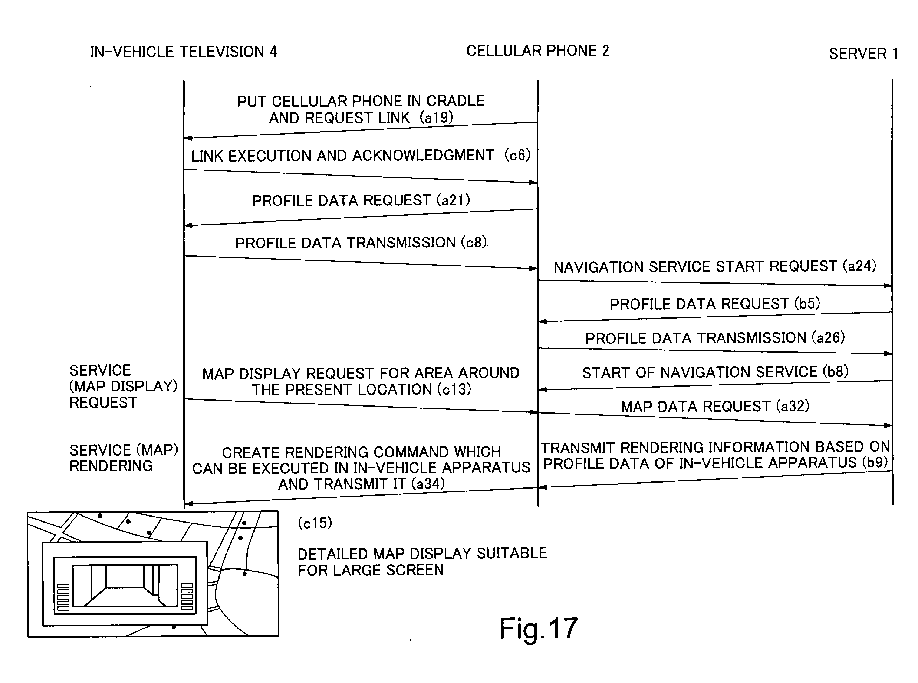

Figs. 7 to 11 are flowcharts showing an overview of processes which are repeatedly performed by the microprocessor 39 of the cellular phone 2 for each predetermined period. Figs. 12 and 13 are flowcharts showing an overview of processes which are repeatedly performed by the microprocessor 47 of the server 1 for each predetermined period. Figs. 14 and 15 are flowcharts showing an overview of processes which are repeatedly performed by the microprocessor 26 of the in-vehicle TV device 4 for each predetermined period. Figs. 16 and 17 are sequence diagrams showing a flow of an overall process in the service provision system 5.

Next, referring to Figs. 7 to 17, processing operations of the microprocessor 39 of the cellular phone 2, the microprocessor 47 of the server 1 and the microprocessor 26 of the in-vehicle TV device 4 as well as a flow of an overall process will be specifically described below. The microprocessor 39 of the cellular phone 2 may include a profile data transmission means, a rendering command generating means, a rendering command transmission means, a data request transmission means in the cellular phone 2 and a rendering execution means. The microprocessor 47 of the server 1 may include the application service program 10 for portable information devices, the application service program 11 for in-vehicle information terminals, an application service program selection means and a rendering information transmission means. The microprocessor 26 of the in-vehicle TV device 4 may include a data request transmission means and a rendering execution means in the in-vehicle TV device 4.

Here, as an example, an application service of a navigation service is used.

Referring to Fig. 7, the microprocessor 39 of the cellular phone 2 performs an initialization process after turning on a power, and sets "0" representing that an application service program is not being used to a use state storing flag F that stores a use state of an application service program by the cellular phone 2 (step a1). After that, the microprocessor 39 of the cellular phone 2 determines whether or not "1" representing that an application service program is being used by the cellular phone 2 alone is set to the flag F (step a2) and whether or not "2" representing that an application service program is being used by the in-vehicle TV device 4 connected with the cellular phone 2 is set (step a3). Setting "1" or "2" to the use state storing flag F will be described later.

Since a value of a use state storing flag F is held to an initial value "0" just after a power has been turned on, a determination result in steps a2 and a3 is "false" inevitably.

Next, the microprocessor 39 of the cellular phone 2 determines whether or not the interface 46 of the cellular phone 2 is connected with the interface 7 in the in-vehicle TV device 4 (step a4). If the connection is not detected, additionally, the microprocessor 39 of the cellular phone 2 determines whether or not a service request signal for requesting to use the application service program is inputted from the key operation unit 36 of the cellular phone 2 (step a5) . If the service request signal is also not detected, processes for realizing a basic function of the cellular phone 2 such as voice transmission/reception, or transmission/reception or texting of an e-mail are performed repeatedly as usual (step a6).

In other words, unless a connection with the in-vehicle TV device 4 or an input of a service request signal from the key operation unit 36 of the cellular phone 2 is detected, the microprocessor 39 of the cellular phone 2 only performs determination processes in steps a2 to a5 and a process in step a6 repeatedly, and only performs the basic function of the cellular phone 2 such as the voice transmission/reception, or the transmission/reception or texting of an e-mail in the process in step a6.

When such processes are repeatedly performed, if a user of the cellular phone 2 inputs the service request signal for requesting to use the application service program by operating the key operation unit 36 of the cellular phone 2, the operation is detected by the microprocessor 39 of the cellular phone 2 in the determination process in step a5.

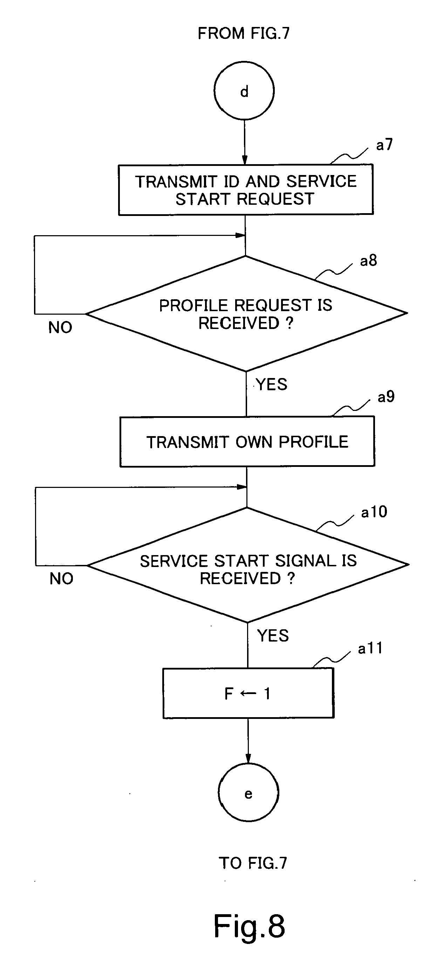

This means that the microprocessor 39 will perform a service request operation shown in Fig. 8 when the service request input by the user of the cellular phone is detected in step a5.

Referring to Fig. 8, in such a case, the microprocessor 39 of the cellular phone 2 transmits the service start request signal, in which an unique ID of the cellular phone 2 is also included, to the server 1 via the network 6 (step a7 in Fig. 16) and enters a standby state of waiting for a profile data request signal from the server 1 (step a8).

On the other hand, referring to Figs. 12 and 13, the microprocessor 47 of the server 1 repeatedly performs a process for determining whether or not the service start request signal from the cellular phone 2 is inputted (step b1), a process for determining whether or not a data request signal from the cellular phone 2 is inputted (step b2) and a process for determining whether or not a service termination request signal from the cellular phone 2 is inputted (step b3) for each predetermined period. The service start request signal transmitted from the cellular phone 2 in step a7 is detected by the microprocessor 47 of the server 1 in the determination process in step b1.

The microprocessor 47 of the server 1 detects the service start request signal including the unique ID of the cellular phone 2, and the microprocessor 47 of the server 1 temporarily stores the unique ID of the cellular phone 2 (step b4), transmits the profile data request signal to the cellular phone 2 corresponding to the ID via the network 6 (step b5 in Fig. 16), and enters a standby state of waiting for the profile data from the cellular phone 2 (step b6).

Referring to Fig. 8, the profile data request signal transmitted from the microprocessor 47 of the server 1 in step b5 shown in Fig. 12 is detected by the microprocessor 39 of the cellular phone 2 in the determination process in step a8.

At this stage, according to the determination process in step a4 shown in Fig. 7 that is performed by the microprocessor 39 of the cellular phone 2, it is already obvious that the cellular phone 2 is not connected with the in-vehicle TV device 4. Accordingly, the microprocessor 39 of the cellular phone 2 reads out the profile data of the cellular phone 2 from the profile data memory unit 8 of the cellular phone 2, that is, the ROM 42, and transmits the profile data to the server 1 (step a9 in Figs. 8 and 16) and enters a standby state is waiting for a service start signal from the server 1 (step a10).

The profile data transmitted from the microprocessor 39 of the cellular phone 2 in step a9 is detected by the microprocessor 47 of the server 1 in the determination process in step b6 shown in Fig. 12.

Referring to Fig. 12, the microprocessor 47 of the server 1 selects the application service program 10 for portable information devices as an application service program of a use target. The application service program 10 for portable information devices is an application service program corresponding to the profile data detected by the determination process in step b6, that is, a profile data of the cellular phone 2 read out from the profile data memory unit 8 of the cellular phone 2. Next, the microprocessor 47 of the server 1 memorizes the fact that the application service program 10 for portable information devices is selected, in connection with the ID of the cellular phone 2 that is temporarily stored in step b4 (step b7). The microprocessor 47 of the server 1 transmits the service start signal to the cellular phone 2 corresponding to the ID via the network 6 and completes processes in the period (step b8 refer to Fig. 16), and returns to an initial standby state in which determination processes in steps b1 to b3 shown in Figs. 12 and 13 are repeatedly performed.

Referring to Fig. 8, the service start signal transmitted from the microprocessor 47 of the server 1 in step b8 shown in Fig. 12 is detected by the microprocessor 39 of the cellular phone 2 in a determination process in step a10.

The microprocessor 39 of the cellular phone 2 sets "1" representing that an application service program is used by the cellular phone 2 alone to the use state storing flag F (step a11), and completes processes in the period.

In a process in successive periods, since the value "1" is already set to the use state storing flag F, a determination result in step a2 shown in Fig. 7 is "true".

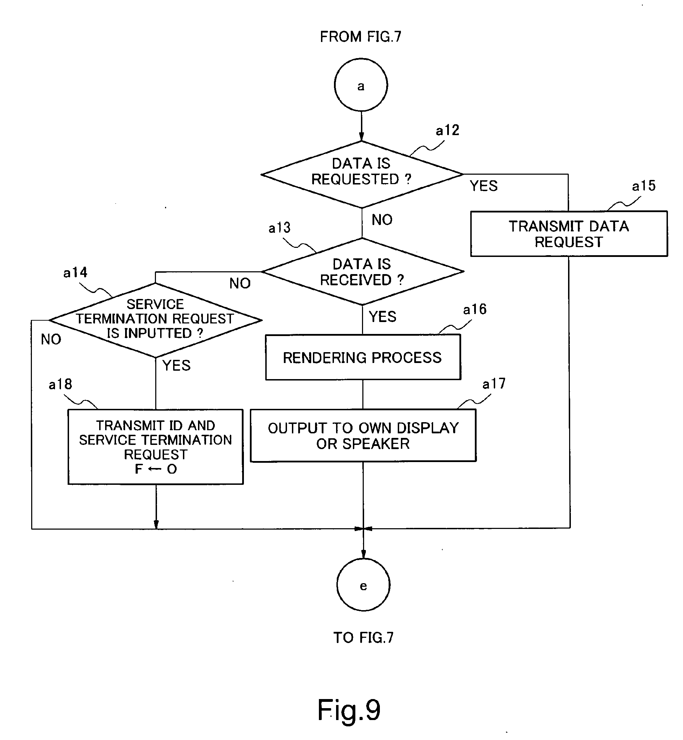

This means that the microprocessor 39 will perform a data request operation shown in Fig. 9 relating to a data request signal for the service input by the user of the cellular phone.

Referring to Fig. 9, in this state, the microprocessor 39 of the cellular phone 2 determines whether or not the data request signal, for example, a signal requesting a display of a map is inputted from the key operation unit 36 of the cellular phone 2 (step a12). When the data request signal is not inputted, the microprocessor 39 of the cellular phone 2 further determines whether or not rendering information about a display of a map or the like is transmitted from the server 1 (step a13). When a transmission of the rendering information is also not detected, the microprocessor 39 of the cellular phone 2 determines whether or not a service termination request signal is inputted from the key operation unit 36 (step a14).

When all the results are "false" with respect to the determination processes in steps a12 to a14, the microprocessor 39 of the cellular phone 2 completes processes in the period without performing any process, performs only determination processes in steps a2, a12, a13 and a14 repeatedly, and enters a standby state of waiting for input of the data request signal or the service termination request signal from the key operation unit 36 or transmission of the rendering information from the server 1.

Here, when a user operates the key operation unit 36 of the cellular phone 2 to input the data request signal, the microprocessor 39 of the cellular phone 2 detects the operation in the determination process in step a12. The microprocessor 39 of the cellular phone 2 transmits the data request signal including the ID of the cellular phone 2 to the server 1 via the network 6 (step a15 in Figs. 9 and 16). The microprocessor 39 of the cellular phone 2 performs only determination processes in steps a2, a12, a13 and a14 repeatedly as mentioned above and enters the same standby state as before (actually, waiting for the rendering information from the server 1).

Referring to Fig. 13, the data request signal transmitted from the microprocessor 39 of the cellular phone 2 in step a15 shown in Fig. 9 is detected by the microprocessor 47 of the server 1 in the determination process in step b2.

With referring to the ID of the cellular phone 2 included in the data request signal, the microprocessor 47 of the server 1 reads out the rendering information for portable information devices corresponding to the data request from the application service program 10 for portable information devices which is currently being selected in connection with the ID of the cellular phone 2. The microprocessor 47 of the server 1 transmits the read-out rendering information to the cellular phone 2 corresponding to the ID via the network 6 (step b9 in Fig. 16). The application service program 10 for portable information devices is the application service program stored in step b7 shown in Fig. 12 in connection with the ID.

Referring to Fig. 9, the rendering information for portable information devices transmitted from the microprocessor 47 of the server 1 in step b9 shown in Fig. 13 is detected by the microprocessor 39 of the cellular phone 2 in the determination process in step a13.

The microprocessor 39 of the cellular phone 2 performs a rendering process based on the rendering information for portable information devices transmitted from the server 1 and the texture data stored in the data memory unit 44 (step a16). The microprocessor 39 of the cellular phone 2 outputs a result of the rendering process to the display 37 and the speaker 35 of the cellular phone 2 as an image or a voice and completes processes in the period (step a17 in Fig. 16), and returns to a standby state in which only determination processes in steps a2, a12, a13 and a14 are repeatedly performed. Further, information required for visualization of data for example, not only map data but also voice data, Point of Interface (POI), navigation information and the like may be included in the rendering information.

Subsequently, in the same manner as mentioned above, a user can repeatedly perform a rendering process for a navigation service that uses the application service program 10 for portable information devices as required by operating the key operation unit 36 of the cellular phone 2 to input the data request signal into the cellular phone 2.

The rendering process is a process based on a specification of the cellular phone 2. That is, the application service program 10 for portable information devices is selected according to a profile data of the cellular phone 2 that is read out from the profile data memory unit 8 of the cellular phone 2. The rendering process is performed based on the rendering information transmitted from the application service program 10 for portable information devices and texture data stored in the data memory unit 44 of the cellular phone 2. Accordingly, map information or the like related to the navigation service can be accurately displayed by using the small display 37 arranged on the cellular phone 2.

Finally, when a user operates the key operation unit 36 of the cellular phone 2 to input the service termination request signal into the cellular phone 2, the microprocessor 39 of the cellular phone 2 detects the operation in the determination process in step a14 in Fig. 9. The microprocessor 39 of the cellular phone 2 transmits the service termination request signal including the ID of the cellular phone 2 to the server 1 via the network 6 and resets a value of the use state storing flag F to "0" (step a18 in Fig. 9)

As a result, the microprocessor 39 of the cellular phone 2 returns to an initial standby state in which the determination processes in steps a2 to a5 and the routine process in step a6 shown in Fig. 7 are repeatedly performed.

Referring to Fig. 13, the service termination request signal transmitted from the microprocessor 39 of the cellular phone 2 in step a18 shown in Fig. 9 is detected by the microprocessor 47 of the server 1 in a determination process in step b3. The microprocessor 47 of the server 1 discards information about a corresponding relation between the ID of the cellular phone 2 and the application service program 10 for portable information devices stored in step b7 shown in Fig. 12, in other words, information indicating that the application service program 10 for portable information devices is selected in connection with the ID for the cellular phone 2 (step b10).

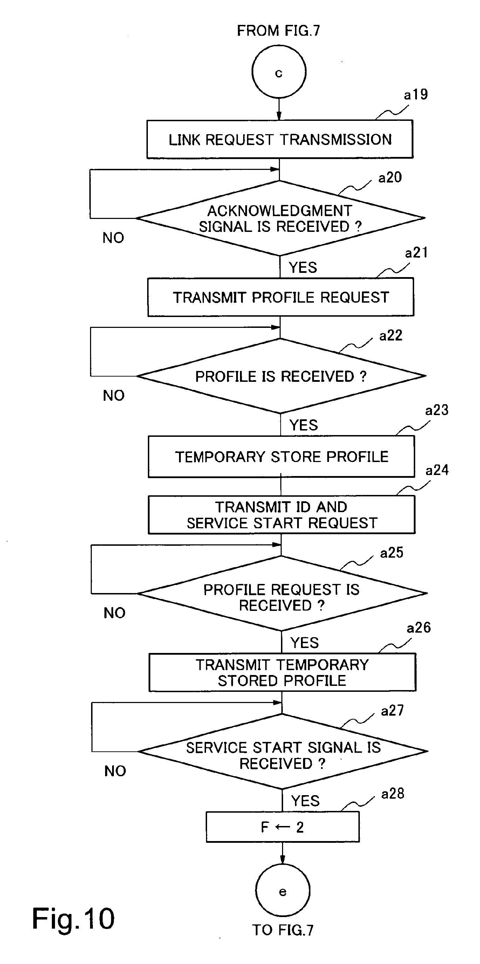

Next, by referring to Fig. 10, operations which are executed when connection between the interface 46 of the cellular phone 2 and the interface 7 in the in-vehicle TV device 4 is detected by the microprocessor 39 of the cellular phone 2 while the microprocessor 39 of the cellular phone 2 repeatedly performs the determination processes in steps a2 to a5 and the routine process in step a6 shown in Fig. 7 will be described (step a4). When the connection is detected, the microprocessor 39 of the cellular phone 2 transmits a link request signal to the microprocessor 26 of the in-vehicle TV device 4 via the interface 46, the interface 7 and the service information system vehicle LAN 32 (step a19 in Fig. 17) and enters a standby state of waiting for a connection acknowledgment signal from the in-vehicle TV device 4 (step a20).

On the other hand, referring to Fig. 14, the microprocessor 26 of the in-vehicle TV device 4 has already finished an initialization process after turning on a power and has set "0" representing that an application service program is not used to a use state storing flag G for storing a use state of the application service program by the in-vehicle TV device 4 by this time (step c1). The microprocessor 26 of the in-vehicle TV device 4 determines whether or not "1" representing that an application service program is being used by the in-vehicle TV device 4 is set to the use state storing flag G (step c2) and determines whether or not the link request signal is received from the cellular phone 2 connected with the in-vehicle TV device 4 (step c3). However, since at the time just after turning on a power, a value of the use state storing flag G is held to an initial value "0" and usually the cellular phone 2 is not connected, determination results in steps c2 and c3 are "false" inevitably. Thus, the microprocessor 26 of the in-vehicle TV device 4 repeatedly performs processes for realizing basic function of the in-vehicle TV device 4 such as a display of a received image as usual (step c4).

The link request signal transmitted from the microprocessor 39 of the cellular phone 2 in step a19 shown in Fig. 10 is detected by the microprocessor 26 of the in-vehicle TV device 4 in the determination process in step c3.

The microprocessor 26 of the in-vehicle TV device 4 confirms connection status between the service information transmission unit 12, the vehicle information transmission unit 14 and the power supply unit 16 in the interface 7, and the interface 46 in cellular phone 2 (step c5). When it is confirmed that no abnormal state is detected, the microprocessor 26 of the in-vehicle TV device 4 transmits a connection acknowledgment signal to the microprocessor 39 of the cellular phone 2 via the service information transmission unit 12 of the interface 7 and the interface 46 of the cellular phone 2 (step c6 in Figs. 14 and 17) and enters a standby state of waiting for the profile data request signal from the cellular phone 2 (step c7).

Referring to Fig. 10, the connection acknowledgment signal transmitted from the in-vehicle TV device 4 in step c6 shown in Fig. 14 is detected by the microprocessor 39 of the cellular phone 2 in the determination process in step a20.

Accordingly, the microprocessor 39 of the cellular phone 2 transmits the profile data request signal which is a signal for acquiring a profile data in the profile data memory unit 9 of the in-vehicle TV device 4 to the in-vehicle TV device 4 (step a21 in Fig. 17) and enters a standby state of waiting for the profile data from the in-vehicle TV device 4 (step a22).

Referring to Fig. 14, the profile data request signal transmitted from the cellular phone 2 in step a21 shown in Fig. 10 is detected by the microprocessor 26 of the in-vehicle TV device 4 in the determination process in step c7.

Next, the microprocessor 26 of the in-vehicle TV device 4 reads out the profile data of the in-vehicle TV device 4 from the profile data memory unit 9 of the in-vehicle TV device 4, that is, the ROM 27 and transmits the profile data to the cellular phone 2 (step c8 in Fig.14 and Fig. 17). The microprocessor 26 of the in-vehicle TV device 4 sets "1" representing that an application service program is used by the in-vehicle TV device 4 to the use state storing flag G (step c9) and completes processes in the period.

As mentioned above, the value "1" is set to the use state storing flag G. Therefore, in a process in successive periods, the determination result in step c2 becomes "true".

This means that the microprocessor 26 will perform a data request operation shown in Fig. 15 relating to a data request signal for the service input by the user of the in-vehicle TV device 4.

Accordingly, referring to Fig. 15, the microprocessor 26 of the in-vehicle TV device 4 determines whether or not the data request signal for example, a signal for requesting a display of a map is inputted from the key operation unit 19 provided on the device body 22 of the in-vehicle TV device 4 (step c10) . When the data request signal is not inputted, the microprocessor 26 of the in-vehicle TV device 4 further determines whether or not a rendering command related to a display of a map or the like is transmitted from the cellular phone 2 (step c11). When transmission of the rendering command is also not detected, the microprocessor 26 of the in-vehicle TV device 4 determines whether or not the service termination request signal is inputted from the key operation unit 19 provided on the device body 22 of the in-vehicle TV device 4 (step c12).

When all the results are "false" with respect to the determination processes in steps c10 to c12, the microprocessor 26 of the in-vehicle TV device 4 completes processes in the period without performing any process and performs only determination processes in steps c2, c10, c11 and c12 repeatedly, and enters a standby state of waiting for the data request signal or the service termination request signal from the key operation unit 19 or transmission of the rendering command from the cellular phone 2.

Referring to Fig. 10, the profile data transmitted from the in-vehicle TV device 4 in step c8 shown in Fig. 14 is detected by the microprocessor 39 of the cellular phone 2 in the determination process in step a22. The microprocessor 39 of the cellular phone 2 stores the profile data temporarily (step a23).

Next, the microprocessor 39 of the cellular phone 2 transmits the service request signal including the unique ID of the cellular phone 2 to the server 1 via the network 6 (step a24 in Figs. 10 and 17) and enters a standby state of waiting for the profile data request signal from the server 1 (step a25).

On the other hand, referring to Figs. 12 and 13, the microprocessor 47 of the server 1 performs a process for determining whether or not the service start request signal from the cellular phone 2 is inputted (step b1), a process for determining whether or not the data request signal from the cellular phone 2 is inputted (step b2) and a process for determining whether or not the service termination request signal from the cellular phone 2 is inputted (step b3) repeatedly for each predetermined period. The service start request signal transmitted from the cellular phone 2 in step a24 shown in Fig. 10 is detected by the microprocessor 47 of the server 1 in the determination process in step b1.

The microprocessor 47 of the server 1 temporarily stores the ID of the cellular phone 2 included in the service start request signal (step b4) . The microprocessor 47 of the server 1 transmits the profile data request signal to the cellular phone 2 corresponding to the ID via the network 6 (step b5 in Figs. 12 and 17) and enters a standby state of waiting for the profile data from the cellular phone 2 (step b6).

Referring to Fig. 10, the profile data request signal transmitted from the microprocessor 47 of the server 1 in step b5 shown in Fig. 12 is detected by the microprocessor 39 of the cellular phone 2 in the determination process in step a25.

Next, the microprocessor 39 of the cellular phone 2 transmits the profile data that is the profile data of the in-vehicle TV device 4 and is temporarily stored in step a23 to the server 1 (step a26 in Fig. 17) and enters a standby state of waiting for the service start signal from the server 1 (step a27).

Referring to Fig. 12, the profile data, that is the profile data of the in-vehicle TV device 4, transmitted from the microprocessor 39 of the cellular phone 2 in step a26 shown in Fig. 10 is detected by the microprocessor 47 of the server 1 in the determination process in step b6.

The microprocessor 47 of the server 1 selects the application service program 11 for in-vehicle information terminals as an application service program of a use target based on the profile data. The microprocessor 47 of the server 1 memorizes that the application service program 11 for in-vehicle information terminals is selected in connection with the ID of the cellular phone 2 (step b7) which has transmitted the profile data of the in-vehicle TV device 4. The microprocessor 47 of the server 1 transmits the service start signal to the cellular phone 2 corresponding to the ID via the network 6, completes processes in the period (step b8 refer to Fig. 17) and returns to an initial standby state in which determination processes in steps b1 to b3 are repeatedly performed. The application service program 11 for in-vehicle information terminals is an application service program corresponding to the profile data detected by a determination process in step b6, that is, the profile data of the in-vehicle TV device 4 connected with the cellular phone 2.

Referring to Fig. 10, the service start signal transmitted from the microprocessor 47 of the server 1 in step b8 shown in Fig. 12 is detected by the microprocessor 39 of the cellular phone 2 in the determination process in step a27.

The microprocessor 39 of the cellular phone 2 sets "2" representing that an application service program is used by the in-vehicle TV device 4 connected with the cellular phone 2 to the use state storing flag F (step a28), and completes processes in the period.

In a process in successive periods, since the value "2" is already set to the use state storing flag F, the determination result in step a3 shown in Fig. 7 becomes "true".

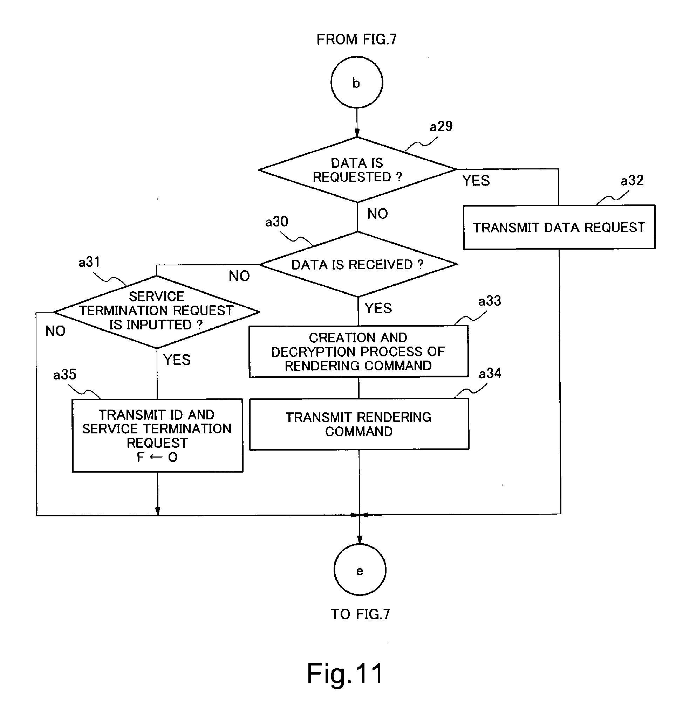

This means that the microprocessor 39 will perform a data request operation shown in Fig. 11 relating to a data request signal for the service.

In this case, referring to Fig. 11, the microprocessor 39 of the cellular phone 2 determines whether or not the data request signal from the in-vehicle TV device 4 via the interface 7, for example, a signal for requesting a display of a map is inputted (step a29). When the data request signal is not inputted, the microprocessor 39 of the cellular phone 2 further determines whether or not the rendering information related to a display of a map or the like is transmitted from the server 1 (step a30). When transmission of the rendering information is also not detected, the microprocessor 39 of the cellular phone 2 determines whether or not the service termination request signal from the in-vehicle TV device 4 via the interface 7 is inputted (step a31).

When all the results are "false" with respect to the determination processes in steps a29 to a31, the microprocessor 39 of the cellular phone 2 completes processes in the period without performing any process and performs only determination processes in steps a2, a3, a29, a30 and a31 repeatedly, and enters a standby state of waiting for the data request signal or the service termination request signal from the in-vehicle TV device 4 or transmission of the rendering information from the server 1.

Next, referring to Fig. 15, an operation which is executed when a user inputs the data request signal, for example, a signal for requesting a display of a map by operating the key operation unit 19 provided on the device body 22 of the in-vehicle TV device 4 will be described. The microprocessor 26 of the in-vehicle TV device 4 detects the operation in the determination process in step c10. The microprocessor 26 of the in-vehicle TV device 4 transmits the data request signal to the cellular phone 2 via the interface 7 (step c13 in Fig. 17).

Referring to Fig. 11, the data request signal is detected by the microprocessor 39 of the cellular phone 2 in the determination process in step a29. The microprocessor 39 of the cellular phone 2 transmits the data request signal including the unique ID of the cellular phone 2 to the server 1 via the network 6 (step a32 in Figs. 11 and 17). In the same manner as mentioned above, the microprocessor 39 of the cellular phone 2 performs only determination processes in steps a2, a3, a29, a30 and a31 repeatedly and enters a standby state of waiting for the rendering information from the server 1.

Referring to Fig. 13, the data request signal transmitted from the microprocessor 39 of the cellular phone 2 in step a32 shown in Fig. 11 is detected by the microprocessor 47 of the server 1 in the determination process in step b2.

With referring to the ID of the cellular phone 2 included in the data request signal, the microprocessor 47 of the server 1 reads out the rendering information for in-vehicle information terminals corresponding to the data request from the application service program 11 for in-vehicle information terminals which is currently being selected in connection with the ID of the cellular phone 2. The microprocessor 47 of the server 1 transmits the rendering information to the cellular phone 2 corresponding to the ID via the network 6 (step b9 in Fig. 17). The application service program 11 for in-vehicle information terminals is an application service program stored in step b7 shown in Fig. 12 in connection with the ID.

Referring to Fig. 11, the rendering information for in-vehicle information terminals transmitted from the microprocessor 47 of the server 1 in step b9 shown in Fig. 13 is detected by the microprocessor 39 of the cellular phone 2 in the determination process in step a30.

The microprocessor 39 of the cellular phone 2 decodes or analyzes the rendering information for in-vehicle information terminals transmitted from the server 1 to generate a rendering command for the in-vehicle TV device 4 (step a33). The microprocessor 39 of the cellular phone 2 transmits the rendering command to the in-vehicle TV device 4 via the interface 7 (step a34 in Figs. 11 and 17). In the same manner as mentioned above, the rendering information may include information required for a visualization of data, for example, not only map data but also voice data, POI, navigation information and the like.

Referring to Fig. 15, the rendering command transmitted from the microprocessor 39 of the cellular phone 2 in step a34 shown in Fig. 11 is detected by the microprocessor 26 of the in-vehicle TV device 4 in the determination process in step c11.

The service renderer 18 in the in-vehicle TV device 4, that is, the microprocessor 26 of the in-vehicle TV device 4 performs a rendering process based on the rendering command sent from the cellular phone 2 and the texture database 17 of the in-vehicle TV device 4 that is, a character, an icon, a color filled pattern or the like stored in the nonvolatile memory 28 (step c14). The microprocessor 26 of the in-vehicle TV device 4 outputs a result of the rendering process to the display 20 and the speaker 21 of the in-vehicle TV device 4 as an image or a voice, completes processes in the period (step c15 in Fig. 17) and returns to a standby state in which only determination processes in steps c2, c10, c11 and c12 are repeatedly performed.

Subsequently, in the same manner as mentioned above, a user can repeatedly perform the rendering process that uses the application service program 11 for in-vehicle information terminals of the server 1 as required by operating the key operation unit 19 of the in-vehicle TV device 4 to input the data request signal into the in-vehicle TV device 4.

The rendering process is performed based on the rendering command obtained by analyzing the rendering information in a process performed in the cellular phone 2 which is transmitted from the application service program 11 for in-vehicle information terminals selected according to the profile data of the in-vehicle TV device 4 and the texture data of the in-vehicle TV device 4. The profile data of the in-vehicle TV device 4 read out from the profile data memory unit 9 of the in-vehicle TV device 4 is a specification of the in-vehicle TV device 4. Map information or the like related to the navigation service can be displayed accurately and in detail by using a relatively large display 20 provided on the in-vehicle TV device 4.

The texture data such as a character, an icon, a color filled pattern has been stored in the texture database 17 of the in-vehicle TV device 4, that is, the nonvolatile memory 28. Accordingly, since it is not necessary to read out the texture data from the data memory unit 44 in the cellular phone 2, a display process can be performed at high speed. The rendering process can be performed by using the texture data optimized according to the specification of the in-vehicle TV device 4.

Finally, when a user operates the key operation unit 19 of the in-vehicle TV device 4 to input the service termination request signal into the in-vehicle TV device 4, the microprocessor 26 of the in-vehicle TV device 4 detects the operation in the determination process in step c12 in Fig. 15. The microprocessor 26 of the in-vehicle TV device 4 transmits the service termination request signal to the cellular phone 2 via the interface 7 (step c16) and resets a value of the use state storing flag G to "0" (step c17).

Referring to Fig. 11, the microprocessor 39 of the cellular phone 2 detects the service termination request signal from the in-vehicle TV device 4 in step a31, transmits the service termination request signal including the ID of the cellular phone 2 to the server 1 via the network 6 and resets a value of the use state storing flag F to "0" (step a35).

As a result, the microprocessor 26 of the in-vehicle TV device 4 returns to an initial standby state in which the determination processes in steps c2 and c3 and the routine process in step c4 shown in Fig. 14 are repeatedly performed. Also, the microprocessor 39 of the cellular phone 2 returns to an initial standby state in which the determination processes in steps a2 to a5 and the routine process in step a6 shown in Fig. 7 are repeatedly performed.

Referring to Figs. 12 and 13, the service termination request signal transmitted from the microprocessor 39 of the cellular phone 2 in step a35 shown in Fig. 11 is detected by the microprocessor 47 of the server 1 in the determination process in step b3. The microprocessor 47 of the server 1 discards information about a correspondence relation between the ID of the cellular phone 2 stored in step b7 and the application service program 11 for in-vehicle information terminals, in other words, information indicating that the application service program 11 for in-vehicle information terminals is selected in connection with the ID of the cellular phone 2 (step b10).

A screen size of the display 20 on the in-vehicle TV device 4 is larger than a screen size of the display 37 on the cellular phone 2. Consequently, if an image displayed on the display 37 is only enlarged and the enlarged image is displayed on the display 20, the displayed image becomes rough and the rough image is liable to distinct. However, in the first exemplary embodiment, the rendering information optimized for displaying an image on the display 20 of the in-vehicle TV device 4 is provided from the application service program 11 for in-vehicle information terminals. Moreover, rendering is performed by using a texture database such as a character, an icon, a color filled pattern and voice data having a dedicated quality stored in the texture database of the in-vehicle TV device 4. Accordingly, an application service used for the cellular phone 2 can be used with a quality in conformity with performance of the in-vehicle TV device 4 provided in the vehicle 3 and a map for a navigation service or the like can be easily viewed in detail.

Usually, since an amount of the texture data is increased when rendering quality is improved, when all processing data including the texture data is obtained from the application service program 11 for in-vehicle information terminals via the communication network 6, it takes an enormous amount of time to obtain the texture data unpractically. When the texture data stored in the data memory unit 44 of the cellular phone 2 is read out and the read out data is inputted into the in-vehicle TV device 4 via the interface 7, to some degree or another, the same problem occurs. In the first exemplary embodiment, data whose amount is large and whose storing is possible is stored in the texture database 17 in the in-vehicle TV device 4, that is, the nonvolatile memory 28, in advance. Accordingly, the rendering information without the texture data, for example, only information such as an index or a size of a texture from an application service program 11 for in-vehicle information terminals is only delivered to the cellular phone 2 via the network 6. The service renderer 18 of the in-vehicle TV device 4, that is, a rendering execution means including the microprocessor 26 of the in-vehicle TV device 4 only performs rendering based on the rendering command generated in the cellular phone 2 by referring to the texture database 17. Accordingly, an overhead for communication of texture data acquisition is reduced, and rendering speed which is the same as that of an ordinary car navigation system can be realized.

### [Second exemplary embodiment]

Next, an exemplary embodiment of a stand alone type service provision system which is obtained by omitting the server 1 and the communication network 6 from the configuration shown in Fig. 3 will be described below.

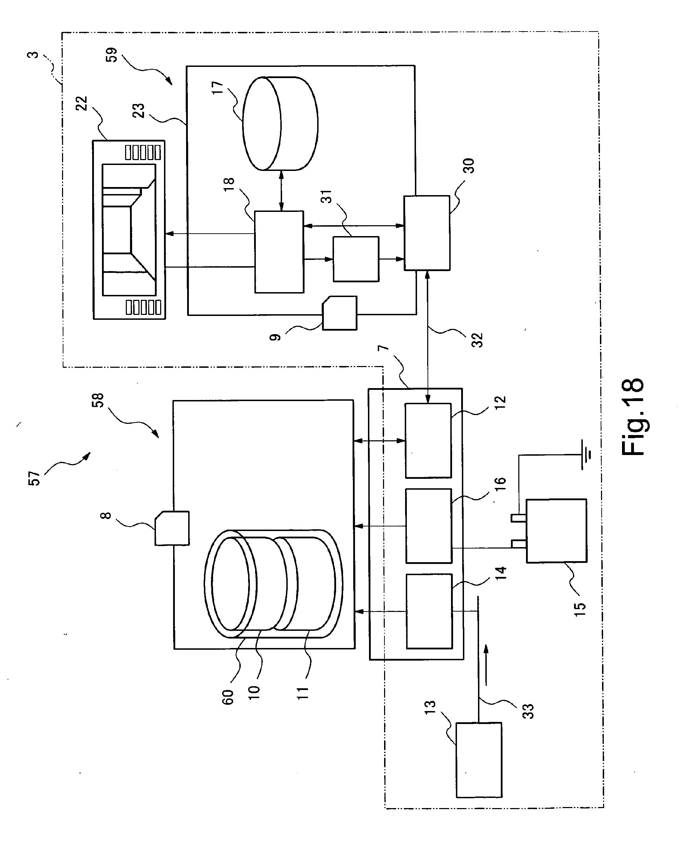

Fig. 18 is functional block diagram showing one exemplary embodiment applied to a service provision system 57 including a cellular phone 58 as an example of portable information devices and an in-vehicle TV device 59 as an in-vehicle information terminal installed in the vehicle 3.

A hardware configuration of the in-vehicle TV device 59 and the cellular phone 58 shown in Fig. 18 is the completely same as the configuration of the in-vehicle TV device 4 of the first exemplary embodiment shown in Fig. 4 and the cellular phone 2 of the first exemplary embodiment shown in Fig. 5. Function assigned to the cellular phone 58 is different from function of the cellular phone 2 of the first exemplary embodiment shown in Fig. 3. In other words, the cellular phone 58 of the second exemplary embodiment is a portable information device which provides an application service by using an application service program, and includes function of the server 1 in the first exemplary embodiment.

Hereinafter, referring to Fig. 5, a configuration of the cellular phone 58 will be described. Referring to Fig. 4, a configuration of the in-vehicle TV device 59 will be described.

The cellular phone 58 of the second exemplary embodiment is a cellular phone in which function of the server 1 of the first exemplary embodiment is added to the cellular phone 2 of the first exemplary embodiment as a built-in application server 60. The application service program 10 for portable information devices and the application service program 11 for in-vehicle information terminals that are provided in server 1 side shown in Fig. 3 are stored in a data memory unit 44 in the cellular phone 58 side. Processes shown in Figs. 7 to 11 and processes shown in Figs. 12 and 13 are performed by the microprocessor 39 in the cellular phone 58 as an internal process of the cellular phone 58 in a stand alone form.

Accordingly, a bus line of the microprocessor 39 of the cellular phone 58 shown in Fig. 5 connects the data memory unit 44 which functions as the application service program 10 for portable information devices and the application service program 11 for in-vehicle information terminals with the microprocessor 39 of the cellular phone 58 so as to be capable of transmitting information. When the bus line of the microprocessor 39 of the cellular phone 58 is regarded as the communication network 6 shown in Fig. 3, function of the cellular phone 58 shown in Fig. 18 is quite equal to function including both function of the server 1 of the first exemplary embodiment shown in Fig. 3 and function of the cellular phone 2 of the first exemplary embodiment shown in Fig. 3.

The microprocessor 39 of the cellular phone 58 functions as a profile data outputting means and determines whether or not the cellular phone 58 is connected with the in-vehicle TV device 59, just like the first exemplary embodiment (Fig. 7). When the connection is not confirmed, the microprocessor 39 of the cellular phone 58 reads out a profile data of the cellular phone 58 from the profile data memory unit 8 (ROM 42) of the cellular phone 58 and outputs the profile data to an application service program selection means of the built-in application server 60 (Fig. 8). When the connection between the cellular phone 58 and the in-vehicle TV device 59 is confirmed, the microprocessor 39 of the cellular phone 58 reads out a profile data of the in-vehicle TV device 59 from the profile data memory unit 9 (ROM 27) of the in-vehicle TV device 59 via the interface 7 and outputs the profile data to the application service program selection means of the built-in application server 60 (Fig. 10).

The microprocessor 39 of the cellular phone 58 also functions as the application service program selection means of the built-in application server 60. When the profile data of the cellular phone 58 is inputted from the profile data outputting means, the microprocessor 39 of the cellular phone 58 selects the application service program 10 for portable information devices as a use target (Fig. 12). When the profile data of the in-vehicle TV device 59 is inputted from the profile data outputting means, the microprocessor 39 of the cellular phone 58 selects the application service program 11 for in-vehicle information terminals as a use target (Fig. 12).

The microprocessor 39 of the cellular phone 58 outputs a data request signal generated by an operation of the key operation unit 36 of the cellular phone 58 (Fig. 9), and the data request signal which is generated by an operation of the key operation unit 19 of the in-vehicle TV device 59 connected with the cellular phone 58 and is inputted via the interface 7 (Fig. 15) to a rendering information reading out means of the built-in application server 60.

The microprocessor 39 of the cellular phone 58 reads out rendering information from an application service program which is selected according to a data request signal inputted from a data request outputting means of the cellular phone 58 at that time. In other words, in a situation in which the cellular phone 58 is used alone, since the application service program 10 for portable information devices is selected by the application service program selection means, the rendering information for portable information devices is read out from the application service program 10 for portable information devices (Fig. 9). In a situation in which the in-vehicle TV device 59 connected with the cellular phone 58 is used, since the application service program 11 for in-vehicle information terminals is selected by the application service program selection means, the rendering information for in-vehicle information terminals is read out from the application service program 11 for in-vehicle information terminals (Fig. 15).

Here, when the rendering information for portable information devices is read out by the rendering information reading out means, the microprocessor 39 of the cellular phone 58 immediately performs a rendering process based on the rendering information and texture data stored in the data memory unit 44 of the cellular phone 58 and outputs a result of the rendering process to the display 37 and the speaker 35 of the cellular phone 58 as an image or a voice (Fig. 9).

On the other hand, when the rendering information for in-vehicle information terminals is read out by the rendering information reading out means, the microprocessor 39 of the cellular phone 58 decodes or analyzes the rendering information to create a rendering command for in-vehicle TV devices 59. The microprocessor 39 of the cellular phone 58 transmits the rendering command to the in-vehicle TV device 59 via the interface 7. Finally, the microprocessor 26 of the in-vehicle TV device 59 performs a rendering process based on the rendering command sent from the cellular phone 58 and a character, an icon, a color filled pattern or the like stored in the texture database 17 (i.e. nonvolatile memory 28) of the in-vehicle TV device 59 and outputs a result of the rendering process to the display 20 and the speaker 21 of the in-vehicle TV device 59 as an image or a voice (Fig. 15).

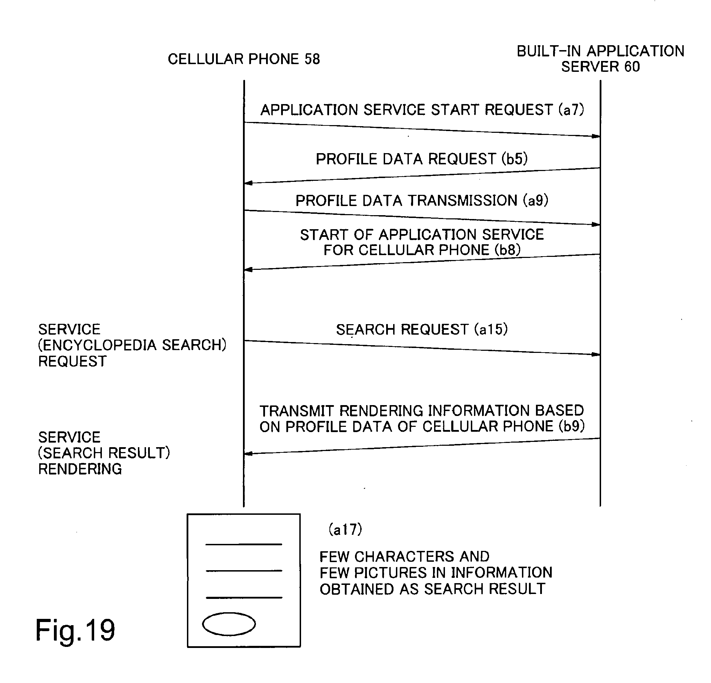

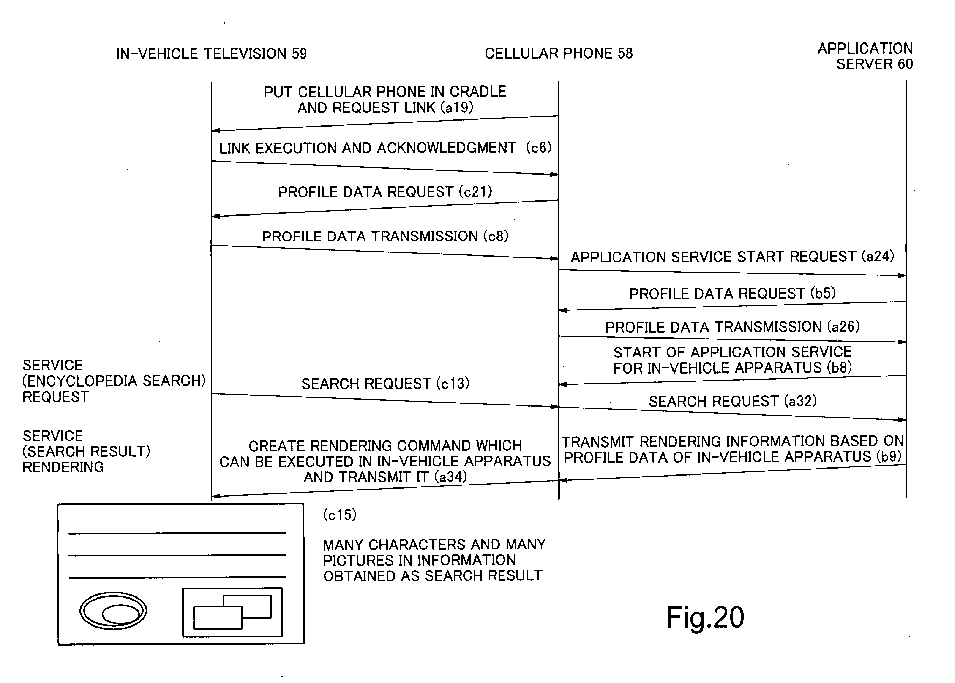

As mentioned above, an actual operation in the second exemplary embodiment is the same as that in the first exemplary embodiment. A case in which an application service for searching an encyclopedia is provided by the cellular phone 58 is exemplified in a flow of an overall process in the service provision system 57 shown in sequence diagrams shown in Figs. 19 and 20.

Here, Fig. 19 shows a flow of a process in which the cellular phone 58 is used alone and the built-in application server 60 is used. A search is performed according to a data request signal generated by the key operation unit 36 of the cellular phone 58. The rendering information for portable information devices is read out from the application service program 10 for portable information devices. The microprocessor 39 of the cellular phone 58 performs a rendering process based on the rendering information and the texture data stored in the data memory unit 44 of the cellular phone 58 and outputs a result of the rendering process to the display 37 of the cellular phone 58.

Fig. 20 shows a process when a search is performed according to a data request signal which is transferred from the in-vehicle TV device 59 connected with the cellular phone 58 to the cellular phone 58 via the interface 7. The rendering information for in-vehicle information terminals is read out from the application service program 11 for in-vehicle information terminals. The microprocessor 39 of the cellular phone 58 decodes or analyzes the rendering information to generate a rendering command for in-vehicle TV devices 59. Moreover, the microprocessor 39 of the cellular phone 58 transmits the rendering command to the in-vehicle TV device 59 via the interface 7. The microprocessor 26 of the in-vehicle TV device 59 performs a rendering process based on the rendering command sent from the cellular phone 58 and a character, an icon, a color filled pattern or the like stored in the texture database 17 (i.e. nonvolatile memory 28) of the in-vehicle TV device 59 and outputs a result of the rendering process to the display 20 of the in-vehicle TV device 59.

As comparison between Figs. 19 and 16, and comparison between Figs. 20 and 17 make clear, a flow of an overall process of the second exemplary embodiment is substantially the same as that of the first exemplary embodiment.

When rendering quality improves, an amount of the texture data usually increases. As a result, when all data including texture data is transferred from the cellular phone 58 to the in-vehicle TV device 59 via the interface 7, it takes an enormous amount of time to transfer the texture data. In the second exemplary embodiment, data whose storing is possible is stored in the texture database 17 in the in-vehicle TV device 59, that is, the nonvolatile memory 28, in advance. The rendering information without texture data, for example, only information such as an index or a size of a texture from the cellular phone 58 is only delivered to the in-vehicle TV device 59 via the network 7. The service renderer 18 of the in-vehicle TV device 59, that is, a rendering execution means including the microprocessor 26 of the in-vehicle TV device 59 only performs rendering based on the rendering command generated in the cellular phone 58 by referring to the texture database 17. Accordingly, overhead for communication for acquiring texture data is reduced and high speed rendering can be realized.

Moreover, the interface may be provided with a power supply unit which supplies an electric power of an in-vehicle battery to a portable information device.

A user can stably use a portable information device for a long time without worrying about running down of a battery of the portable information device.

A vehicle information transmission unit which transmits information detected by an in-vehicle engine control unit or the like to a portable information device may be arranged in the interface.

An arithmetic processing using data such as a running speed (e.g. A drive shaft revolution), an engine load (e.g. An opening degree of a throttle), a final gear ratio (e.g. A shift position) and the like detected by the in-vehicle engine control unit or the like can be performed as an internal process of a portable information device. Additionally, the portable information device transmits the data to a server for an arithmetic processing performed by the server, receives a result of the processing from the server and transfers the result to a vehicle information terminal. After the processes, the result can be displayed on a display or the like of the vehicle information terminal.

As mentioned above, the data used for display on a display provided on an in-vehicle information terminal or the like is optimum data generated by a microprocessor of the in-vehicle information terminal by using the rendering information and the texture data according to a specification of the in-vehicle information terminal. An application service used by a portable information device such as a cellular phone can be used with quality in conformity with performance of the in-vehicle information terminal installed in a vehicle, and detail can be easily viewed.

In order to improve quality of rendering, an amount of texture data has to be increased. The texture data required for the rendering is stored in a texture database in the in-vehicle information terminal. Compared with a related technology in which a result of a rendering process and texture data are merely transmitted to the in-vehicle information terminal from a portable information device and a result of the process is displayed on a display of the in-vehicle information terminal or the like, a transfer volume and a transfer time of the data between the portable information device and the in-vehicle information terminal are reduced and a high-speed display process can be performed.

As mentioned above, the data used for display on a display provided on an in-vehicle information terminal or the like is optimum data generated by a microprocessor of the in-vehicle information terminal by using the rendering information and the texture data according to a specification of the in-vehicle information terminal. An application service used by a portable information device such as a cellular phone can be used with quality in conformity with performance of the in-vehicle information terminal installed in a vehicle, and detail can be easily viewed.

In order to improve quality of rendering, an amount of the texture data has to be increased. The texture data required for rendering is stored in the texture database in the in-vehicle information terminal. Compared with a related technology in which a result of a rendering process and texture data are merely transmitted to an in-vehicle information terminal from a portable information device and the result is displayed on a display of the in-vehicle information terminal or the like, a transfer volume and a transfer time of the data between the portable information device and the in-vehicle information terminal are reduced and a high-speed display process can be performed.

In a service provision system and a rendering execution method of the exemplary embodiment, an application service program for portable information devices in which rendering information according to a specification of the portable information device is stored and an application service program for in-vehicle information terminals in which rendering information according to a specification of the in-vehicle information terminal is stored are provided together.

When connection between a portable information device and an in-vehicle information terminal is not confirmed, that is, in a situation in which a portable information device is used alone, an application service program for portable information devices is selected by the application service program selection means. By reading out the rendering information for portable information devices and carrying out a rendering process by the rendering execution means of a portable information device, a result of the process is outputted to a display of the portable information device or the like.

On the other hand, when connection between a portable information device and an in-vehicle information terminal is confirmed, in other words, in a situation in which the in-vehicle information terminal connected with the portable information device is used, an application service program for in-vehicle information terminals is selected by the application service program selection means. The rendering information for in-vehicle information terminals is read out and a rendering command for in-vehicle information terminals is generated by a rendering command generating means of the portable information device. Moreover, the rendering command is delivered to the in-vehicle information terminal. The rendering process is performed by the rendering execution means of the in-vehicle information terminal based on the rendering command and the texture database of the in-vehicle information terminal and a result the process is outputted to a display of the in-vehicle information terminal or the like. Accordingly, data used for display on a display of the in-vehicle information terminal or the like is optimized according to a specification of the in-vehicle information terminal.

The application service used by the portable information device such as a cellular phone can be used with quality in conformity with performance of the in-vehicle information terminal installed in a vehicle and detail can be easily viewed.

Also, the texture data required for rendering is stored in the texture database in the in-vehicle information terminal. Compared with a related technology in which a result of a rendering process and texture data are merely transmitted to an in-vehicle information terminal from a portable information device and a result of the process is displayed on a display of the in-vehicle information terminal or the like, a transfer volume and a transfer time of the data between the portable information device and the in-vehicle information terminal are reduced and a high-speed display process can be performed.

In descriptions of the above mentioned exemplary embodiment, an in-vehicle TV device is used as an example of an in-vehicle information terminal. However, a display device of a rear view monitor camera that is used when the vehicle 3 backs, and a reproduction apparatus of a DVD or the like also can be used.

There is no limitation for a form of an application service and it can be applied to a various kind of publicly known application services in addition to a navigation service and searching function for an encyclopedia.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

Further, it is the inventor's intention to retain all equivalents of the claimed invention even if the claims are amended during prosecution.

## Claims

1. A service provision system, comprising:
a server which includes at least two application service programs, selects an application service program corresponding to profile data transmitted by an apparatus that transmits a service start request, and transmits rendering information stored in the application service program that is selected according to a data request;
an in-vehicle information terminal which includes first profile data representing a specification of the terminal and performs a rendering process using a texture stored in the terminal based on a rendering command; and
a portable information device which includes second profile data representing a specification of the device, identifies a status of connection with the in-vehicle information terminal, and transmits the data request to the server by using either the first profile data or the second profile data, wherein
the portable information device includes:
a data request transmission unit to transmit the data request to the server by using the first profile data when the connection with the in-vehicle information terminal is identified; and
a rendering command transmission unit to generate the rendering command based on the rendering information received from the server and transmit the rendering command to the in-vehicle information terminal when the connection with the in-vehicle information terminal is identified.

2. The service provision system according to claim 1, wherein
the portable information device further includes a rendering execution unit to perform the rendering process based on the rendering information, and wherein
when no connection with the in-vehicle information terminal is identified, the data request transmission unit transmits the data request to the server by using the second profile data, and the rendering execution unit renders the rendering information received from the server.

3. The service provision system according to claim 1 or 2, wherein
the data request transmission unit of the portable information device includes:
a profile data transmission unit to request transmission of the first profile data to the in-vehicle information terminal, temporarily store the received first profile data, transmit to the server the service start request which identification information of the portable information device is included, and transmit the temporarily stored first profile data in response to a profile request received from the server, when the connection with the in-vehicle information terminal is identified, and
the server transmits the profile request to an apparatus corresponding to the identification information included in the service start request, selects the application service program corresponding to the received profile data, and stores the selected application service program corresponding to the identification information.

4. The service provision system according to claim 3, wherein
the data request transmission unit of the portable information device further includes a data request unit to transmit to the server the data request which the identification information of the portable information device is included, and wherein
the server transmits the rendering information stored in the application service program which is stored corresponding to the identification information included in the data request.

5. The service provision system according to any one of claims 1 to 4, further comprising:
an interface arranged between the portable information device and the in-vehicle information terminal, which connects the portable information device with the in-vehicle information terminal so as to enable transmission of information.

6. The service provision system according to claim 5, wherein
the interface includes:
a power supply unit to supply an electric power from an in-vehicle battery to the portable information device; and
a vehicle information transmission unit to transmit vehicle information required for navigation to the portable information device.

7. The service provision system according to any one of claims 1 to 6, wherein
the server is included in the portable information device.

8. A rendering execution method which is applied to a system that includes a server having at least two application service programs, an in-vehicle information terminal having a first profile data representing a specification of the terminal and a portable information device having a second profile data representing a specification of the device, the method comprising:
identifying a status of connection with the in-vehicle information terminal and transmitting a data request to the server by using either the first profile data or the second profile data from the portable information device;
selecting an application service program corresponding to the received profile data and transmitting from the server rendering information stored in the selected application service program to the portable information device which transmits the data request, wherein
when identifying that the portable information device is connected with the in-vehicle information terminal, the method further includes:
transmitting the first profile data to the server from the portable information device;
generating a rendering command based on the rendering information received from the server and transmitting the rendering command to the in-vehicle information terminal from the portable information device; and
performing in the in-vehicle information terminal a rendering process by using a texture of the terminal based on the rendering command.

9. The rendering execution method according to claim 8 further includes:
transmitting from the portable information device the second profile data to the server when identifying that the portable information device is not connected with the in-vehicle information terminal; and
performing in the portable information device the rendering process based on the rendering information received from the server.

10. The rendering execution method according to claim 7 or 8, wherein
the server is included in the portable information device.
